# EUROPÄISCHE PATENTSCHRIFT

(11) **EP 4 063 421 B1**
(45) Veröffentlichungstag und Bekanntmachung des Hinweises auf die Patenterteilung: **31.12.2025**
(21) Anmeldenummer: 22155318.3
(22) Anmeldetag: 07.02.2022
(51) Int. Cl.: C08G 18/10, C08G 18/48, C08G 18/75, C08G 18/77, C09D 175/08, C08G 18/16, C08G 18/18

(54) **2-KOMPONENTEN-BESCHICHTUNGSZUSAMMENSETZUNG ZUR BAUWERKSABDICHTUNG MIT KATALYSATOR-COKATALYSATOR-SYSTEM**
2-COMPONENT COATING COMPOSITION FOR MASONRY SEALING WITH CATALYST COCATALYST SYSTEM
COMPOSITION DE REVÊTEMENT À 2 COMPOSANTS DESTINÉE À L'ÉTANCHÉITÉ DE BÂTIMENT POURVUE DE SYSTÈME CATALYSEUR-COCATALYSEUR

(30) Priorität: 25.03.2021 DE 102021107569
(43) Veröffentlichungstag der Anmeldung: 28.09.2022
(73) Patentinhaber: FRANKEN SYSTEMS GmbH, 97258 Gollhofen (DE)
(72) Erfinder: LUCKERT, Sven, 97320 Sulzfeld (DE); SCHMALSTIEG, Lutz, 97320 Sulzfeld am Main (DE); SCHÄFER, Julian, 97204 Höchberg (DE); SCHOBBEN, Christian, 48268 Greven (DE)
(74) Vertreter: Gleim Petri Patent- und Rechtsanwaltspartnerschaft mbB

(56) Entgegenhaltungen:
- EP-A1- 1 650 261
- WO-A1-2007/093382
- WO-A1-2018/015552
- WO-A1-2019/057670

## Beschreibung

Die Erfindung betrifft eine 2-Komponenten-Beschichtungszusammensetzung zur Bauwerksabdichtung enthaltend ein Katalysator-Cokatalysator-System.

Die Abdichtung von Dachflächen, Balkonen und Terrassen mithilfe bituminöser oder polymerer Beschichtungsmaterialien ist gängige Praxis. Hierbei werden auf den Untergrund, der aus Holz, Metall oder Beton besteht, zunächst eine oder mehrere Isolierschichten aufgebracht und anschließend wird eine ein- oder mehrlagige Abdichtungsschicht aufgebracht. Diese Abdichtungsschicht besteht entweder aus polymeren oder bituminösen Abdichtungsfolien, die im Dach- und Anschlussbereich ausgelegt werden und an den Rändern und im Überlappungsbereich mit Klebdichtmassen, reaktiven Flüssigkunststoffen, Schmelzklebebändern, thermisch oder mit Quellschweißmittel miteinander verbunden werden.

Bei Flachdächern mit einer Vielzahl von Dachdurchdringungen und Neigung von weniger als 10% sowie zur Abdichtung von Balkonen und Terrassen werden besonders vorteilhaft reaktive Flüssigkunststoffe eingesetzt, die als flüssige, im Wesentlichen lösemittelfreie Beschichtungs- und Abdichtungsmaterialien im Dachbereich aufgebracht werden und anschließend aushärten.

Reaktive Flüssigkunststoffe für die Bauwerksabdichtung, insbesondere zur Abdichtung von Flachdächern, Balkonen und Terrassen sind bekannt. Diese basieren typischerweise auf ungesättigten Polyestern, Polyurethanen oder Acrylatcopolymeren. Geeignete polymere Abdichtungsmaterialien sind in der EOTA-Leitlinie ETAG Nr. 005 (Leitlinie für die europäische Technische Zulassung für flüssig aufzubringende Dachabdichtungen) genauer spezifiziert: Zum einen müssen die Massen dauerhaft, d.h. auch nach Alterung, hinreichend elastisch sein, um die durch Temperaturwechsel entstehenden Spannungen aufzufangen; zum anderen müssen die Beschichtungen mechanisch belastbar sein, um Undichtigkeiten infolge Durchstoßung, z.B. punktuelle Belastung mit hohem Druck oder durch herab fallende Gegenstände, zu vermeiden. Darüber hinaus müssen die reaktiven Flüssigkunststoffe eine gute Haftung zu allen üblichen Untergründen im Dachbereich aufweisen, wie insbesondere Metallen, Mauerwerk und Beton, bituminösen Dachbahnen oder polymeren Abdichtungsbahnen auf Basis von unterschiedlichen Polymermaterialien. Grundsätzlich ist der Haftverbund zwischen Abdichtungsbahnen und reaktivem Flüssigkunststoff eine zentrale Schwachstelle des Abdichtungsbereichs. Deshalb besteht ein großer Bedarf für reaktive Flüssigkunststoffe mit verbesserten Hafteigenschaften.

Unter den polymeren Abdichtungsbahnen gewinnen Bahnen auf Basis von Polyolefinen aufgrund ihres besonders guten Preis-Leistungsverhältnisses eine zunehmende Bedeutung. Bei diesen Abdichtungsbahnen handelt es sich typischerweise um armierte Kunststoffbahnen auf Basis von Polyethylen-, Polypropylen- und/oder Polybutylen-Copolymeren. Derartige Kunststoffbahnen werden handelsüblich als FPO-Bahnen (Flexibilisiertes Polyolefin) oder TPO-Bahnen (thermoplastisches Polyolefin) bezeichnet. Ein großer Nachteil der Polyolefin-Abdichtungsbahnen ist der schlechte Haftverbund mit reaktiven Flüssigkunststoffen. Zur Herstellung einer kraftschlüssigen Verbindung zwischen Polyolefinbahnen und reaktiven Flüssigkunststoffen ist daher eine Vorbehandlung mit einem Haftprimer oder Voranstrich zwingend erforderlich. Aber selbst in Kombination mit handelsüblichen Haftprimern ist die Haftung in vielen Fällen nicht ausreichend.

Als reaktive Flüssigkunststoffe können 1-komponentige und 2-komponentige Abdichtungsmassen auf Basis von silanterminierten Polymeren besonders vorteilhaft in der Bauwerksabdichtung eingesetzt werden. Entsprechende Produkte zeichnen sich durch eine einfache Verarbeitbarkeit, gute mechanische Eigenschaften sowie toxikologische Unbedenklichkeit aus. Auf dieser Technologie basierende Materialien und ihre Verwendung als Abdichtungsmaterialien für Dachbeschichtungen sind z.B. aus EP-A 1 987 108, EP-A 2 352 776, EP-A 2 561 024, DE 10 2007 038 030 A1 sowie der WO 2019 114990 A1 bekannt. Im Hinblick auf die Haftung zu polymeren Abdichtungsbahnen besteht insbesondere bei dieser Produktgruppe ein Verbesserungsbedarf.

Ferner sind aus dem Stand der Technik die WO 2019057670A1, WO2018015552A1, WO 2007/093382A1 und die EP1650261A1 als technologischer Hintergrund zu nennen.

Es ist die Aufgabe der vorliegenden Erfindung verbesserte Abdichtungsmaterialien auf Basis silanterminierter Polymere bereitzustellen, welche eine verbesserte Haftung zu handelsüblichen Abdichtungsbahnen aufweisen.

Diese Aufgabe wird durch eine 2-Komponenten-Beschichtungszusammensetzung zur Bauwerksabdichtung mit Katalysator-Cokatalysator-Systemgemäß den Ansprüchen gelöst.

Die Erfindung umfasst eine 2-Komponenten-Beschichtungszusammensetzung zur Bauwerksabdichtung mit Katalysator-Cokatalysator-System umfassend eine Komponente A und eine Komponente B, wobei die Komponente A zumindest umfasst:
A1) eine polymere Verbindung der Formel

   Y-[(CH₂)_{b}-Si-R1ₐ-R2(₃₋ₐ)]ₓ,

   wobei Y ein x-wertiger, ggf. Urethangruppen aufweisender Polyetherrest ist, der über eine Urethangruppe, eine Thiourethangruppe oder über eine ggf. substituierte Harnstoffgruppe angebunden ist und R1 eine Methylgruppe ist und R2 eine Methoxy- oder Ethoxygruppe ist und a gleich 0 oder 1 ist und b gleich 1 oder 3 ist;
A2) anorganische Füllstoffe;
A3) Aminosilanverbindungen, mit mindestens einer primären und/oder sekundären Aminogruppe;
A4) Verbindungen der Strukturformel Rₓ-Si(OCH₃)₃, wobei Rₓ eine Vinyl- oder Phenylgruppe;
A5) Alterungsschutzmittel;
und wobei die Komponente B zumindest umfasst:
B1) eine organische Säure oder deren saure Salze

Die Erfindung beruht auf der überraschenden Beobachtung, dass die erfindungsgemäßen 2-Komponenten-Abdichtungsmassen auf Basis silanterminierter Polymere eine verbesserte Haftung zu handelsüblichen Abdichtungsbahnen aufweisen im Vergleich zu den analogen 1-Komponenten-Abdichtungsmassen.

2-Komponenten-Abdichtungsmassen auf Basis silanterminierter Polymere sind seit langer Zeit bekannt und sind gängiger Stand der Technik: so beschreiben beispielsweise die EP 2894199 A1, die EP 2682432 A1 oder die EP 1650261 A1 Dichtmassen auf Basis silanterminierter Polyether, die als 1- oder 2-Komponentensysteme zu formulieren sind: im Fall einer 2-Komponentenformulierung enthält die erste Komponente das silanterminierte Polymer, Additive und Füllstoffe, die zweite Komponente enthält an sich bekannte Katalysatoren für die SilanPolykondensation, Weichmacher, Wasser und Füllstoff.

In diesen Veröffentlichungen werden Katalysatoren des Standes der Technik benannt, die die Silanpolykondensation beschleunigen. Dies sind metallorganische Katalysatoren wie beispielsweise organische Zinn-, Titan oder Zirkoniumverbindungen, organische Aminkatalysatoren mit primären und/oder sekundären und/oder tertiären Stickstoffatomen, Amidin- und Guanidin-Katalysatoren, diverse Metallsalze von Carbonsäuren, Carbonsäuren sowie saure Phosphorsäureester. Darüber hinaus findet sich in der EP 1650261 A1 ein Hinweis darauf, dass die Kombination von aminischen Katalysatoren und Carbonsäuren oder sauren Phosphorsäureestern eine erhöhte katalytische Aktivität aufweisen.

2-Komponenten-Abdichtungsmassen werden darüber hinaus in der EP 2220163 B1 beschrieben: hier enthält die erste Komponente spezielle silanterminierte Polyurethanpolymere, Additive, Füllstoffe und den Härtungskatalysator und die zweite Komponente Weichmacher, Wasser und Tenside.

Besonders reaktive 1-Komponentenformulierungen werden in der neueren WO 2019 114990 A1 beschrieben. Auch hier findet sich ein Hinweis auf die Möglichkeit zur Formulierung von 2-Komponenten-Systemen findet, wobei die zweite Komponente aus Wasser oder anderen OH-haltigen Verbindungen besteht.

Hinweise auf veränderte oder sogar verbesserte Haftungseigenschaften von 2-Komponentenformulierungen durch Verwendung bestimmter Katalysator-Cokatalysator-Systeme finden sich in keiner der genannten Veröffentlichungen.

Im Rahmen der Erfindung als Komponenten A1) einsetzbare polymere Verbindungen besitzen die allgemeine Strukturformel

Y-[(CH₂)_{b}-Si-R1ₐ-R2₍₃₋ₐ₎]ₓ,

wobei Y ein x-wertiger, ggf. Urethangruppen aufweisender Polyetherrest ist, der über eine Urethangruppe, eine Thiourethangruppe oder über eine ggf. substituierte Harnstoffgruppe angebunden ist und R1 eine Methylgruppe ist und R2 eine Methoxy- oder Ethoxygruppe ist und a gleich 0 oder 1 ist und b gleich 1 oder 3 ist.

Derartige polymere Verbindungen A1) können grundsätzlich durch zwei unterschiedlichen Synthesekonzepte hergestellt werden:
Im Rahmen der Erfindung einsetzbar als Komponente A1 sind einerseits Umsetzungsprodukte von Polyoxyalkylenpolyolen, vorzugsweise Polyoxypropylenpolyolen, besonders bevorzugt Polyoxypropylendiolen eines mittleren Molekulargewichts Mn von 2000 bis 30000 g/mol, vorzugsweise 4000 bis 20000 g/mol mit Isocyanatosilanen der allgemeinen Formel

O=C=N-(CH₂)_{b}-Si-R1ₐ-R2₍₃₋ₐ₎

wobei R1 für eine Methylgruppe und R2 für eine Methoxy- oder eine Ethoxygruppe steht und a = 0 oder 1 ist und b = 1 oder 3 ist.

Als Polyoxyalkylenpolyole ebenfalls einsetzbar sind Urethangruppen aufweisende Polyoxyalkylenpolyole, die durch Umsetzung von Polyoxyalkylenpolyolen mit unterschüssigen Mengen an Diisocyanaten herstellbar sind und den oben gemachten Angaben entsprechen.

Bevorzugt ist a = 0, b = 1 und R2 steht für eine Ethoxygruppe. Ebenfalls bevorzugt ist a = 0, b = 3 und R2 steht für eine Methoxygruppe; besonders bevorzugt ist a = 1, b = 1 und R1 steht für eine Methylgruppe und R2 für eine Methoxygruppe. Derartige silanterminierte Polymere A1 sind besonders bevorzugt. Sie zeichnen sich durch eine besonders hohe Reaktivität gegenüber Feuchtigkeit aus und können mit sehr geringen Mengen der nachstehend beispielhaft genannten Katalysatoren oder deren Kombinationen zur schnellen Aushärtung mit Luftfeuchtigkeit gebracht werden.

Andererseits einsetzbar sind im Rahmen der Komponente A1 Umsetzungsprodukte von Isocyanat-Endgruppen aufweisenden Polyoxyalkylen-Polymeren mit Isocyanatreaktiven Alkoxysilylverbindungen der allgemeinen Formel

Z-(CH₂)_{b}-Si-R1ₐ-R2₍₃₋ₐ₎

Die Isocyanat-Endgruppen aufweisenden Polyoxyalkylen-Polymere werden hierbei durch Umsetzung von Polyoxyalkylenpolyolen mit überschüssigen Mengen an Diisocyanaten hergestellt und entsprechen hinsichtlich ihres Molekulargewichtes den oben gemachten Angaben. Die Isocyanat-Endgruppen aufweisenden Polyoxyalkylen-Polymere werden in einem zweiten Reaktionsschritt umgesetzt mit Alkoxysilylverbindungen, die eine funktionelle Gruppe enthalten, die mit Isocyanatgruppen reaktiv ist und die der oben genannten allgemeinen Formel entsprechen. Hierbei entsprechen a, b, R1 und R2 den vorstehend gemachten Angaben, Z steht für eine OH-Gruppe, eine SH-Gruppe, eine NH₂-Gruppe oder eine NHR₃-Gruppe, wobei R₃ für einen beliebigen organischen Rest mit bis zu 16 Kohlenstoffatomen steht. Zur Umsetzung mit den Isocyanat-Endgruppen aufweisenden Polyoxyalkylen-Polymeren geeignet sind beispielsweise Aminosilanverbindungen mit primären oder sekundären Aminogruppen wie 3-Aminopropyltrimethoxysilan, 3-Aminopropyltriethoxysilan, N-Methyl-3-aminopropyltrimethoxysilan, N-Cyclohexyl-3-aminopropyltrimethoxysilan, N-Butyl-3-aminopropyltrimethoxysilan, N-Phenyl-3-aminopropyltrimethoxysilan, N-Cyclohexyl-3-aminopropyl-methyldimethoxysilan sowie Addukte von Malein- und/oder Fumarsäureester an Aminopropyltrimethoxysilan oder Aminopropyltriethoxysilan. Weiterhin geeignet zur Umsetzung mit den Isocyanat-Endgruppen aufweisenden Polyoxyalkylen-Polymeren sind Mercapto-funktionelle Alkoxysilanverbindungen wie Mercaptopropyltrimethoxysilan oder Mercaptopropyltriethoxysilan. Ebenso zur Umsetzung mit den Isocyanat-Endgruppen aufweisenden Polyoxyalkylen-Polymeren geeignet sind OH-funktionelle Alkoxysilanverbindungen, die beispielsweise durch Umsetzung der oben genannten Aminosilanverbindungen mit Caprolacton problemlos hergestellt werden können.

Im Rahmen der Erfindung als Komponente A2 einsetzbar sind anorganische Füllstoffe des Standes der Technik. Beispiele für Füllstoffe A2 sind nicht verstärkende Füllstoffe, also Füllstoffe mit einer BET-Oberfläche von vorzugsweise bis zu 50 m²/g, wie Quarz, Diatomeenerde, Calciumsilikat, Zirkoniumsilikat, Talkum, Kaolin, Zeolithe, Metalloxidpulver, wie Aluminium-, Magnesium-, Titan-, Eisen- oder Zinkoxide bzw. deren Mischoxide, Bariumsulfat, Calciumcarbonat, Mischkristalle aus Kaolin und Quarz oder auch verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET- Oberfläche oder Aluminiumtrihydroxid. Die genannten Füllstoffe können hydrophobiert sein, beispielsweise durch die Behandlung mit Organosilanen bzw. - siloxanen oder mit Fettsäuren oder durch Veretherung von Hydroxylgruppen zu Alkoxygruppen.

Bevorzugt handelt es sich bei den erfindungsgemäß einzusetzenden Füllstoffen A2 um Calciumcarbonat, Talkum, Aluminiumhydroxid, Kieselsäure und/oder Titandioxid in der Rutil-Form, wobei der Einsatz von Aluminiumhydroxid besonders bevorzugt wird, da dieser Füllstoff zudem eine brandhemmende Wirkung besitzt. Bevorzugte Calciumcarbonat-Typen sind gemahlen oder gefällt und gegebenenfalls oberflächenbehandelt mit Fettsäuren wie Stearinsäure oder deren Salzen. Bei der bevorzugten Kieselsäure handelt es sich bevorzugt um pyrogene Kieselsäure.

Die eingesetzten Füllstoffe A2 haben typischerweise einen Feuchtigkeitsgehalt von weniger als 1 Gew.-% bezogen auf das Gewicht des Füllstoffs, bevorzugt weniger als 0,5 Gew.-%.

In untergeordneten Mengen weiterhin einsetzbar als Füllstoffe A2 sind organische oder anorganische Fasern, wie beispielsweise Glasfasern, Kohlefasern oder Kunststofffasern, wie beispielsweise Polyester-, Polyamid-, Aramid- oder Polyacrylatfasern sowie Metallfasern oder Fasern mit metallischen Bestandteilen.

Als Komponente A3 erfindungsgemäß einsetzbar sind Verbindungen mit mindestens einer primären und/oder sekundären Aminogruppe. Beispielhaft genannt seien Aminverbindungen mit primären und/oder sekundären Amingruppen wie beispielsweise Alkylamine mit 1 bis 20 Kohlenstoffatomen, Cyclohexylamin, Benzylamin, aliphatische oder cycloaliphatische sekundäre Amine, wie Dialkylamine mit 2 bis 36 Kohlenstoffatomen oder Alkyl-Cyclohexylamine oder Dicyclohexylamin, Morpholin, Piperidin, Alkanolamine wie beispielsweise Ethanolamin oder Diethanolamin, Diamine wie Diaminoethan, Diaminopropan oder Diaminobutan, Piperazin, Polyethylenpolyamine wie Diethylentriamin oder Triethylentetramin, Xylylendiamin, Aminoalkylamine wie beispielsweise Aminopropylmorpholin, Aminoethylpiperazin, N,N-Dialkylpropylamine wie beispielsweise N,N-Diethyl-1,3-diaminopropan.

Weiterhin einsetzbar im Rahmen der Komponente A3 sind Verbindungen, die Verbindungen mit primären und/oder sekundären Amingruppen durch Hydrolyse bilden, wie beispielsweise Verbindungen mit mindestens einer Ketimin-, Aldimin- oder Oxazolidin-Gruppe.

Im Rahmen der Erfindung hat sich gezeigt, dass derartige Amine eine besonders hohe katalytische Aktivität in den erfindungsgemäßen 2-Komponenten Beschichtungszusammensetzungen aufweisen.

Besonders bevorzugt im Rahmen der Komponente A3 einsetzbar sind Verbindungen, die neben einer primären und/oder sekundären Aminogruppe zusätzlich mindestens eine Alkoxysilylgruppe aufweisen. Erfindungsgemäß einsetzbar sind an sich bekannte Aminosilan-Verbindungen der allgemeinen Strukturformel

NHR4-(CH2)_{b}-SiR1ₐ-R2₍₃₋ₐ₎

worin R1, R2, a und b die vorstehend genannte Bedeutung haben und R4 für ein Wasserstoffatom, für einen Alkylrest, einen Cycloalkylrest, einen Arylrest oder einen Aminoalkylrest steht; a ist vorzugsweise 0 und R2 steht besonders bevorzugt für eine Methoxygruppe, b steht besonders bevorzugt für 3. Geeignet sind in diesem Zusammenhang auch oligomere Produkte, wie sie durch Kondensation der genannten Aminosilanverbindungen hergestellt werden können.

Beispiele für bevorzugt als Komponente A3 einsetzbare Aminosilanverbindungen sind 3-Aminopropyltrimethoxysilan, 3-Aminopropyltriethoxysilan, N-Aminoethyl-3-aminopropyltrimethoxysilan, N-Aminoethyl-3-aminopropyltriethoxysilan, N-Aminoethyl-3-aminopropyl-methyldimethoxysilan, N-Methyl-3-aminopropyltrimethoxysilan, N-Cyclohexyl-3-aminopropyltrimethoxysilan, N-Butyl-3-aminopropyltrimethoxysilan, N-Phenyl-3-aminopropyltrimethoxysilan, N-Cyclohexyl-3-aminopropyl-methyldimethoxysilan sowie Oligomerisierungsprodukte dieser Aminosilanverbindungen. Besonders bevorzugt einsetzbare Aminosilanverbindungen enthalten mindestens eine primäre Aminogruppe und Methoxysilylgruppen. Beispiele für besonders bevorzugt einsetzbare Aminosilanverbindungen sind 3-Aminopropyltrimethoxysilan, N-Aminoethyl-3-aminopropyltrimethoxysilan, N-Aminoethyl-3-aminopropyl-methyldimethoxysilan.

Die Aminosilan-Verbindungen der Komponente A3 wirken im Rahmen der Komponente A gleichzeitig als Härtungskatalysator und als Haftvermittler. Von großem Vorteil ist dabei die Tatsache, dass derartige Aminosilan-Verbindungen bei der Aushärtung in das Polymergerüst eingebaut werden, wodurch keinerlei schädliche Katalysatorreste aus dem Produkt in die Umwelt gelangen können. Selbstverständlich können im Rahmen der Komponente A3 auch Mischungen der genannten Aminoverbindungen eingesetzt werden.

Im Rahmen der Erfindung einsetzbar als Komponente A4 sind Verbindungen der allgemeinen Strukturformel Rₓ-Si(OCH₃)₃ , worin Rₓ eine Vinyl- oder eine Phenylgruppe ist oder ein aus diesen Verbindungen abgeleitetes Oligomerisierungsprodukt ist. Diese Verbindungen besitzen eine besonders erhöhte Reaktivität gegenüber Feuchtigkeit und werden demzufolge zur Trocknung der anorganischen Füllstoffkomponenten A2 im Rahmen des Herstellprozesses und zur Verbesserung der Lagerstabilität der Komponente A eingesetzt. Bevorzugt wird als Komponente A4 Vinyltrimethoxysilan eingesetzt.

Im Rahmen der Erfindung einsetzbar als Komponente A5 werden die bekannten Kunststoffstabilisatoren des Standes der Technik eingesetzt. Hierbei handelt es sich insbesondere um Antioxidationsmittel, UV-Absorber und Radikalfänger vom Typ der gehinderten Amin-Lichtstabilisatoren -HALS-. Bevorzugt werden Kombinationen der genannten Stabilisatortypen eingesetzt. Besonders bevorzugt werden höhermolekulare, oligomere oder polymere Stabilisatoren der genannten Typen als Alterungsschutzmittel verwendet, wobei derartige höhermolekulare Stabilisatoren auch mehrere Stabilisatortypen in sich vereinen können. Eine Zusammenfassung der Thematik der Alterungsschutzmittel findet sich in der WO 2019 114990 A1, die diesbezüglich vollumfänglich in den Gegenstand der vorliegenden Erfindung einbezogen wird.

Als Antioxidationsmittel seien beispielhaft sterisch gehinderte Phenole genannt, deren Struktur sich vom 2,6-Di-tert.-butyl-4-methylphenol ableitet. Beispiele für entsprechende Handelsprodukte sind Irganox 1135, Irganox 1076, Irganox 1010, Irganox 1098, Irganox 5057, Hostanox O3, Sumilizer GA80, Irganox 3790.

Als UV-Absorber seien Verbindungen vom Benzotriazol-Typ und Verbindungen vom Triazin-Typ beispielhaft genannt. Beispiele für entsprechende Handelsprodukte sind Tinuvin P, Tinuvin 213, Tinuvin 326, Tinuvin 327, Tinuvin 328, Tinuvin 329, Tinuvin 571, Milestab 1174, oder Milestab1577.

Als gehinderte Amin-Lichtstabilisatoren -HALS- werden Verbindungen bezeichnet, deren Grundstruktur sich vom 2,2,6,6-Tetramethylpiperidin ableitet. Beispiele für entsprechende Handelsprodukte sind Tinuvin 770, Tinuvin 123, Tinuvin 765, Tinuvin 622, Tinuvin144, Cyasorb UV3853, Cyasorb UV3622, Milestab 4050, Hostavin N30, Chimasorb 944, Chimasorb 119.

Nach einem bevorzugten Aspekt umfasst die 2-Komponenten-Beschichtungszusammensetzung zusätzlich als Komponente A6 Formulierungshilfsmittel. Als Komponente A6 unter anderem einsetzbar sind die dem Fachmann aus der Beschichtungstechnologie bekannten Hilfs- und Zusatzmittel. Dies sind zum einen Formulierungshilfsmittel wie Entlüfter, Entschäumer und Netz- und Dispergieradditive sowie Rheologiehilfsmittel, zum anderen Haftvermittler, insbesondere solche aus der Gruppe der funktionellen Silane, wie beispielsweise Epoxysilane, Carbamatosilane, Isocyanuratosilane, Acryloxysilane oder Methaycryloxysilane.

Nach einem weiteren bevorzugten Aspekt umfasst die Komponente A als Formulierungshilfsmittel A6 ein organisches Lösemittel mit einem Anteil von maximal 5 Gew%, vorzugsweise mit einem Anteil von maximal 3 Gew% bezogen auf das Gesamtgewicht der Komponenten A und B. Erfindungsgemäße organische Lösemittel können beispielsweise Ethylacetat, Butylacetat, Methoxypropylacetat, Methylethylketon, Methylisobutylketon, Toluol, Xylol, aromatische oder (cyclo-)aliphatische Kohlenwasserstoffgemische oder beliebigen Gemische derartiger Lösungsmittel sein.

Nach einem besonders bevorzugten Aspekt umfasst die Komponente A als Formulierungshilfsmittel A6 einen Weichmacher mit einem Anteil von maximal 5 Gew%, vorzugsweise mit einem Anteil von maximal 3 Gew% bezogen auf das Gesamtgewicht der Komponenten A und B. Erfindungsgemäße Weichmacher können ausgewählt sein aus der Gruppe der Phosphorsäureester, der Sulfonsäureester oder der aromatischen und/oder aliphatischen Carbonsäureester. Weiterhin einsetzbar sind hochsiedende aliphatische und/oder aromatische Kohlenwasserstoffgemische. Die Mitverwendung derartiger Weichmacher ist weniger bevorzugt, da die Langzeitstabilität der Bauwerksabdichtung durch deren Mitverwendung negativ beeinflusst wird. Als Weichmacher im Rahmen der Komponente A6 mitverwendbar sind weiterhin Polyetherpolyole, insbesondere Polypropylenoxid-Polyether eines Molekulargewichtes von vorzugsweise 1000 bis 12000 g/mol. Im Rahmen der vorliegenden Erfindung konnte gezeigt werden, dass die Mitverwendung derartiger Weichmacher in Mengen von maximal 5 Gew%, vorzugsweise maximal 3 Gew% bezogen auf das Gesamtgewicht der Komponenten A und B das mechanische Verhalten und das Alterungsverhalten nicht negativ beeinflusst.

Nach einem vorteilhaften Aspekt umfasst die Komponente A als Formulierungshilfsmittel A6 einen reaktiven Verdünner. Im Rahmen der Formulierungshilfsmittel A6 können weiterhin reaktive Verdünner entsprechend der Lehre der WO 2019 114990 A1 mitverwendet werden, Beispiele für geeignete reaktive Verdünner sind insbesondere n-Alkyltrialkoxysilylverbindungen, deren Alkylgruppe mindestens 8 Kohlenstoffatome aufweist, wie Isooctyltrimethoxysilan, Isooctyltriethoxysilan, n-Octyltrimethoxysilan, n-Octyltriethoxysilan, n-Decyltrimethoxysilan, n-Decyltriethoxysilan, n-Dodecyltrimethoxysiloan, n-Dodecyltriethoxysilan, n-Tetradecyltrimethoxysilan, n-Tetradecyltriethoxysilan, n-Hexadecyltrimethoxysilan, n-Hexadecyltriethoxysilan sowie n- Octadecyltriethoxysilan. Die Mitverwendung derartiger Silane vermindert die Wasseraufnahme der ausgehärteten Beschichtungen, was sich positiv auf die Langzeitstabilität auswirkt. Die Mitverwendung von Verbindungen der allgemeinen Strukturformel

R_{y}-Si(OCH₃)₃

in Mengen von bis zu 25 Gew% bezogen auf das Gesamtgewicht der Komponente A ist bevorzugt, wobei Ry für einen Alkylrest mit mindestens 10 Kohlenstoffatmen steht. Nach einem vorteilhaften Aspekt umfasst die Komponente A als Formulierungshilfsmittel A6 ein flüssiges Silikonharz. Im Rahmen des Formulierungshilfsmittel A6 können flüssige Silikonharze entsprechend der Lehre der WO 2019 114990 A1mitverwendet werden. Vorzugsweise besitzen die Siliconharze eine mittlere Molmasse (Zahlenmittel) Mn von ca. 600 g/mol bis ca. 3000 g/mol, sind lösemittelfrei und weisen eine Viskosität von maximal 20000 mPas bei 23°C auf.

Im Rahmen der Komponente A6 können ggf. weitere Katalysatoren mitverwendet werden, die die Silanpolykondensation beschleunigen. Hierbei kann es sich um beliebige, bisher bekannte Katalysatoren für durch Silanpolykondensation härtende Massen handeln, die auch im Gemisch eingesetzt werden können.

Beispiele für metallhaltige Härtungskatalysatoren sind organische Zinnverbindungen wie beispielsweise Dibutylzinndilaurat, Dibutylzinnmaleat, Dibutylzinndiacetat, Dibutylzinndioctanoat , Dibutylzinnacetylacetonat, Dibutylzinnoxide , und entsprechende Dioctylzinnverbindungen. Weitere Beispiele für metallhaltige Härtungskatalysatoren sind organische Titanverbindungen, insbesondere Ester der Titansäure wie beispielsweise Tetrabutyltitanat, Tetrapropyltitanat , Tetraisopropyltitanat und Titantetraacetylacetonat. Beispiele für Amidin-Katalysatoren B4 sind insbesondere cyclische Amidine wie 5 -Diazabicyclo [4.3.0] non-5-en,1 oder 8 -Diazabicyclo [5.4.0] undec-7-en. Als Guanidin-Katalysatoren sind allgemein alle N-Alkyl oder N-Aryl-substituierte Katalysatoren mit Guanidinstruktur geeignet. Beispielhaft genannt seien an dieser Stelle Tetramethylguanidin, N,N'-Diphenylguanidin, N,N'-Di-o-Tolylguanidin oder 1-o-Tolylbiguanid. Weitere Beispiele geeigneter Katalysatoren sind tertiäre Amine wie beispielsweise Triethylamin, Tributylamin, N,N-Dimethylethanolamin, Aminoethylpiperazin,1,4-Diazabicyclo [2,2,2] octan, N-Bis- (N, N-dimethyl-2 - aminoethyl)- methylamin, N, N-Dimethylcyclohexylamin, N,N'-Dimethylpiperazin, Bis-2-dimethylaminoethyl-ether, N-Alkylmorpholine wie beispielsweise N-Ethylmorpholin oder Dimorpholinodiethylether.

Besonders bevorzugt werden im Rahmen der Komponente A6 keine Katalysatoren eingesetzt, die die Silanpolykondensation beschleunigen.

Die Herstellung der Komponente A erfolgt in einer dem Fachmann bekannten Art unter Einsatz geeigneter Mischaggregate nach Methoden und Verfahren wie sie zur Herstellung von feuchtigkeitshärtenden Zusammensetzungen üblich sind durch Zugabe der einzelnen Bestandteile der Komponente A in beliebiger Reihenfolge und Vermischen.

Dieses Vermischen kann bei Raumtemperatur unter Normaldruck erfolgen oder aber bei erhöhter Temperatur im Bereich von bis zu 120°C. Weiterhin kann es vorteilhaft sein, zeitweilig oder ständig unter vermindertem Druck zu mischen, wie z.B. bei 30 bis 500 hPa Absolutdruck, um flüchtige Verbindungen und/oder Luft zu entfernen. Die Herstellung der Komponente A kann dabei grundsätzlich in diskontinuierlichen und kontinuierlichen Verfahren erfolgen. Zur Herstellung der Komponente A können auch Vormischungen einzelner Komponenten hergestellt und diese dann miteinander vermischt werden.

Typischerweise enthält die Komponente A folgende Mengenverhältnisse bezogen auf das Gesamtgewicht der Komponente A:
- 30 bis 65 Gew%, vorzugsweise 40 bis 55 Gew% an polymerer Verbindung A1
- 25 bis 55 Gew%, vorzugsweise 30 bis 45 Gew% an anorganischen Füllstoffen A2
- 0,2 bis 2,5 Gew%, vorzugsweise 0,5 bis 2 Gew% an Amino- und Alkoxysilylgruppen aufweisenden Verbindungen A3
- 1 bis 6 Gew%, vorzugsweise 1,5 bis 5 Gew% an Vinyl- und/oder Phenyltrimethoxysilylverbindungen A4
- 1,5 bis 7,5 Gew%, vorzugsweise 2,5 bis 5 Gew% an Alterungsschutzmittel A5
- 0 bis 25 Gew%, vorzugsweise 1 bis 15 Gew% an Hilfs- und Zusatzmitteln A6, mit der Maßgabe, dass organische Lösemittel und/oder Weichmacher in Mengen von maximal 5 Gew%, vorzugsweise maximal 3 Gew%, bezogen auf das Gesamtgewicht der Komponente A eingesetzt werden.

Die Komponente A enthält somit alle wesentlichen Bestandteile einer 1-Komponenten-Beschichtungs-zusammensetzung und ist als feuchtigkeitshärtendes Abdichtungssystem im Sinne der EOTA-Leitline ETAG 005 problemlos einzusetzen.

Die Komponente B umfasst zumindest:
B1) eine organische Säure oder deren saure Salze

Wesentlicher Bestandteil der Komponente B sind organische Säuren B1, die in Verbindung mit den Aminen der Gruppe A3,insbesondere mit den Aminosilan-Verbindungen der Gruppe A3, cokatalytisch wirken. Es ist erfindungswesentlich, dass in den erfindungsgemäßen 2-Komponenten-Beschichtungs-zusammensetzungen in der A-Komponente mit den katalytisch wirkenden Aminverbindungen A3 ein Katalysator für die Silanpolykondensation enthalten ist und in der Komponente B ein Cokatalysator, der für sich allein nicht wirksam ist, sondern nur in Verbindung mit dem Katalysator A3 der Komponente A die Silanpolykondensation beschleunigt. Im Rahmen der vorliegenden Erfindung hat sich gezeigt, dass derartige 2-Komponenten-Beschichtungszusammensetzungen ausgesprochen tolerant gegenüber Mischungsfehlern sind. Im Rahmen der vorliegenden Erfindung hat sich darüber hinaus gezeigt, dass die erfindungsgemäßen 2-Komponenten-Abdichtungsmassen eine wesentlich bessere Haftung zu diversen handelsüblichen Abdichtungsbahnen aufweisen im Vergleich zu den zugrundeliegenden 1-Komponenten-Abdichtungsmassen ohne Cokatalysator. Geeignete saure organische Verbindungen B1 sind beispielsweise Carbonsäuren, Dicarbonsäuren oder Tricarbonsäuren mit 1 bis 24 Kohlenstoffatomen. Beispiele für geeignete Carbonsäuren im Rahmen der Komponente B1 sind Ameisensäure, Essigsäure, Propionsäure, Capronsäure, 2-Ethylhexansäure, Decansäure, Neodecansäure, Dodecansäure, Tetradecansäure, Hexadecansäure oder Octadecansäure. Ebenfalls geeignet im Rahmen der Komponente B1 sind ungesättigte Carbonsäuren wie Undecylensäure, Ölsäure oder Linolsäure. Weiterhin geeignet im Rahmen der Komponente B1 sind mehrwertige gesättigte und ungesättigte Carbonsäuren wie Oxalsäure, Malonsäure, Adipinsäure, Sebacinsäure, Maleinsäure, Fumarsäure, Weinsäure, Äpfelsäure oder Cyclohexandicarbonsäure. Weiterhin geeignet im Rahmen der Komponente B1 sind aromatische Carbonsäuren wie Benzolcarbonsäure, Salicylsäure, die isomeren Benzol-Dicarbonsäuren und Benzoltricarbonsäuren. Auch saure Salze derartiger Carbonsäuren sind prinzipiell im Rahmen der Komponente B1 einsetzbar. Ebenfalls geeignet im Rahmen der Komponente B1 sind saure Derivate organischer Phosphorsäureester, insbesondere Mono- und Diester der Phosphorsäure. Beispiele hierfür sind Ethylphosphat, Diethylphosphat, Butylphosphat, Dibutylphosphat, 2-Ethylhexylphosphat oder Bis-2-Ethylhexylphosphat.

Bevorzugt einsetzbar im Rahmen der Komponente B sind Carbonsäuren und Dicarbonsäuren mit 6 bis 18 Kohlenstoffatomen, besonders bevorzugt 8 bis 16 Kohlenstoffatomen.

Nach einem vorteilhaften Aspekt umfasst die Komponente B1 eine aliphatische Carbonsäure oder Dicarbonsäure.

Nach einem weiteren vorteilhaften Aspekt umfasst die Komponente B1 eine aliphatische Monocarbonsäure mit 1 bis 16 Kohlenstoffatomen.

Nach einem besonders vorteilhaften Aspekt umfasst die Komponente B zusätzlich mindestens einen ein- oder mehrwertigen Alkohol.

Nach einem bevorzugten Aspekt umfasst die Komponente B als Komponente B2 Wasser. Dabei kann die Menge an Wasser derart gewählt sein, dass diese stöchiometrisch für eine quantitative Silanpolykondensation ausreicht.

Nach einem besonders bevorzugten Aspekt umfasst die 2-Komponenten-Beschichtungszusammensetzung Wasser als Komponente B2 zu einem Anteil in einem Bereich von 0,05 Gew% bis 0,9 Gew%, vorzugsweise 0,1 Gew% bis 0,5 Gew%, bezogen auf das Gesamtgewicht der Komponente A. Es ist besonders bevorzugt, dass die Komponente B als homogene Lösung eingesetzt wird. Im Fall wasserunlöslicher Säuren ist es erforderlich, dass die Komponente B zusätzlich einen Lösungsvermittler für die Katalysatoren B1 und das Wasser enthält. Dies können geringe Mengen polarprotischer oder polar aprotischer Lösemittel der bekannten Art sein. Vorteilhaft einzusetzen sind in diesem Zusammenhang niedermolekulare oder höhermolekulare, ein- oder mehrwertige Alkohole. Besonders bevorzugt einsetzbar als Lösungsmittel sind ethoxylierte- und/oder propoxylierte Alkohole eines Molekulargewichts von bis zu 2000g/mol. Die Lösungsmittel werden in einer Menge von weniger als 5 Gew%, bevorzugt weniger als 2 Gew% bezogen auf das Gesamtgewicht der Komponenten A und B eingesetzt, um nachteilige Auswirkungen auf die mechanischen Eigenschaften und das Alterungsverhalten zu vermeiden.

In der erfindungsgemäßen 2-Komponenten-Abdichtungsmassen werden die Komponenten A und B unmittelbar vor der Applikation vermischt. Das Mischen kann durch einfaches Verrühren der Komponenten A und B von Hand und unter Baustellenbedingungen erfolgen. Besonders vorteilhaft wird eine geringe Menge der Komponente B der Komponente A zugesetzt und die Mischung wird durch einfaches Verrühren homogenisiert. Besonders vorteilhaft werden die Komponenten A und B in Gebindegrößen konfektioniert, die den vorgegebenen Mischungsverhältnissen entsprechen. Die erfindungsgemäßen 2-Komponenten-Abdichtungsmassen haben einerseits eine vergleichsweise lange Verarbeitungszeit von bis zu 15 bis 30 Minuten, härten andererseits aber innerhalb kurzer Zeit von ca. 60 bis 120 Minuten in beliebiger Schichtstärke zuverlässig aus.

Gegenstand der vorliegenden Erfindung ist auch ein Verfahren zur Bauwerksabdichtung umfassend den Verfahrensschritt der Applikation einer 2-Komponenten-Beschichtungszusammensetzung gemäß einem der vorangehenden Ansprüche in Kombination mit einem Textil. So kann eine gewebearmierte Beschichtung erzielt werden. Die im erfindungsgemäßen Verfahren einzusetzenden 2-Komponenten- Abdichtungsmasssen werden bei der Abdichtung von Bauwerken grundsätzlich in Kombination mit einem textilen Flächengebilde appliziert. Mit diesem Begriff sind alle gewirkten, gestrickten, gewebten, geflochtenen, gehäkelten oder auf sonstige Art aus Garnen oder Fasern hergestellten Flächengebilde gemeint. Geeignete textile Flächengewebe basieren auf organischen oder anorganische Fasern, wie beispielsweise Glasfasern, Kohlefasern oder Kunststofffasern, wie beispielsweise Polyester-, Polyamid-, Aramid- oder Polyacrylatfasern, Metallfasern oder Fasern mit metallischen Bestandteilen o. dgl.. Vorzugsweise werden Vliesmaterialien eingesetzt wie beispielsweise Glasfaservliese oder Polyestervliese. Vorzugsweise werden die Flächengebilde, insbesondere in Form von Polyestervliesen, mit einem Flächengewicht von 50 bis 300 g/m² oder 75 bis 250 g/m², besonders bevorzugt 110 bis 165 g/m² im erfindungsgemäßen Verfahren eingesetzt. Hierdurch ist für viele Anwendungsfälle eine besondere Verstärkung bei gleichzeitig sehr geringer Ablaufneigung gegeben.

Nach einem bevorzugten Aspekt werden mit dem Verfahren zur Bauwerksabdichtung Dehn- und/oder Arbeits- und/oder Sollrissfugen im Betonbau ausgebildet, , insbesondere bei Konstruktionen mit Beton-Fertigbauteilen.

Die im erfindungsgemäßen Verfahren einzusetzenden 2-Komponenten-Abdichtungsmassen werden vorzugsweise unmittelbar vor der Verarbeitung gemischt und härten bei den im Baubereich üblichen Umgebungstemperaturen, insbesondere ca. 23°C, innerhalb einer Zeit von nur 60 Minuten aus. Im bevorzugten Fall, dass die Komponente B Wasser enthält, erfolgt die Durchhärtung in dieser Zeit auch in hohen Schichtstärken von bis zu 10 mm. Die Verarbeitung erfolgt dabei typischerweise so, dass der abzudichtende Teil eines Bauwerks zunächst mit dem vorgemischten 2-Komponenten-Beschichtungssystem beschichtet wird, bspw. durch Streichen, Rollen oder Rakeln, dann wird das textile Flächengebilde wie z. B. ein Vlies in das aufgetragene Abdichtungssystem eingelegt und abschließend wird das Flächengebilde mit dem Abdichtungssystem beispielsweise durch Streichen, Rollen oder Rakeln in innigen Kontakt gebracht. Hierbei wird das Flächengebilde vorzugsweise so überarbeitet, dass dieses vollständig mit dem reaktiven Abdichtungssystem durchtränkt ist und sich besonders bevorzugt darüber hinaus eine homogene Oberflächenstruktur ergibt. Gegebenenfalls kann nochmals Beschichtungszusammensetzung aufgebracht werden, um eine gleichmäßigere Oberfläche zu erzeugen.

Die Applikation erfolgt zumeist so, dass ca. 2-10 kg, bevorzugt 2-5 kg, besonders bevorzugt 2,5kg bis 3,5kg Abdichtungssystem pro Quadratmeter zu beschichtender Fläche appliziert werden. Die Applikation erfolgt zumeist derart, dass in Kombination mit dem textilen Flächengebilde wie insbesondere Vlies eine Beschichtungsdicke von mindestens 2 mm, typischerweise von 2 bis 5 mm oder vorzugsweise 2,2 mm bis 3,5 mm resultiert (bezogen auf die Gesamtschichtdicke).

Das erfindungsgemäß zu verwendende Abdichtungssystem zeigt eine ausgezeichnete Haftung zu vielen im Baubereich üblichen Substraten, insbesondere zu Beton und Mauerwerk sowie Dachbahnen auf Polymer- oder Bitumenbasis einerseits und zu sich selbst andererseits. Eine Grundierung des Substrates vor dem Auftrag des im erfindungsgemäßen Verfahren zu verwendenden Reaktivsystems ist vielfach nicht notwendig. Trotzdem kann das Aufbringen einer Grundierung in speziellen Fällen vorteilhaft sein. Hierbei hat sich gezeigt, dass die erfindungsgemäß einzusetzenden 2-Komponenten-Beschichtungssysteme eine ausgezeichnete Verträglichkeit mit nahezu allen Grundierungen und Voranstrichen des Marktes aufweisen.

In Kombination mit polymeren Abdichtungsbahnen, insbesondere mit Abdichtungsbahnen auf Polyolefinbasis ist die Vorbehandlung mit einem Primer bzw. Haftanstrich in der Regel erforderlich. Besonders geeignet sind hierfür Lösungen von chlorierten und/oder modifizierten chlorierten Polyolefinen Die chlorierten und/oder modifizierten chlorierten Polyolefine weisen typischerweise einen Chlorgehalt 10 bis 25 Gew% auf, bezogen auf den Feststoffanteil der chlorierten Polyolefine. Typischerweise weisen die eingesetzten chlorierten bzw. modifizierten chlorierten Polyolefine ein Zahlenmittleres Molekulargewicht von 8000 bis 50000 auf. Die Menge an eingesetztem chlorierten Polyolefin in der Primerformulierung beträgt typischerweise 0,2 bis 5 Gew%, jeweils bezogen auf das Gesamtgewicht der Primer und auf den Feststoffanteil der chlorierten Polyolefine. Derartige Primerformulierungen sind dem Fachmann geläufig und handelsüblich.

Wie bereits vorstehend ausgeführt, weist das im erfindungsgemäßen Verfahren zu verwendende Abdichtungssystem auch eine gute Haftung zu sich selbst auf. Mithin ist es möglich, mehrere Schichten der erfindungsgemäß zu verwendenden Abdichtungsmasse übereinander aufzubringen, wobei zwischen den verschiedenen Aufbringungsvorgängen die jeweils zuvor aufgebrachte Abdichtungsmasse bereits ausgehärtet sein kann.

Das erfindungsgemäße Verfahren ermöglicht somit eine zuverlässige Abdichtung von Bauwerken im Innen- und Außenbereich, beispielsweise im Verbund mit Fliesen- und Plattenbelägen zur Abdichtung von Innenräumen gegen nichtdrückendes Wasser, sowie von Behältern gegen von Innen drückendes Wasser im Innen- und Außenbereich. Derartige Verfahren sind national gemäß Bauregelliste A Teil 2, Ifd. Nr. 2.50 und international gemäß ETAG 022 "Abdichtungen für Böden und Wände in Nassräumen" geregelt. Das erfindungsgemäße Verfahren ist insbesondere geeignet zur Abdichtung gegen drückendes und nicht drückendes Wasser bei Fundamenten, Terrassen, Balkonen, Flachdächern, Parkdecks, Tiefgaragen und/oder Betonsockeln, bei im wesentlichen horizontalen Bauwerksflächen wie Terrassen und Flachdächern insbesondere im Bereich von Aufkantungen. Das erfindungsgemäße Verfahren deckt somit die Bereiche der Bauwerksabdichtung nach DIN 18195 und der Dachabdichtung nach DIN 18531 in vollem Umfang ab.

Die nachfolgenden Beispiele sollen das Wesen der Erfindung näher erläutern, diese jedoch nicht einschränken.

### Patentbeispiele

### Allgemeine Herstellvorschrift für die Komponente A

Die Komponenten A1 und A4 werden in einem handelsüblichen Kreisdissolver bei Normaldruck und Umgebungstemperatur vorgelegt, die Bestandteile der Komponente A2 werden unter Rühren in beliebiger Reihenfolge zugegeben, anschließend wird bei erhöhter Dispergiergeschwindigkeit dispergiert, wobei sich die Mischung aufgrund der Scherkräfte auf 50 bis 55°C erwärmt. Man dispergiert 20 Minuten unter Luft- und Feuchtigkeitsauschluss und setzt dann die Komponenten A3, A5 und A6 bei niedriger Rührgeschwindigkeit zu. Die Mischung wird unter Feuchtigkeitsauschluss abgefüllt.

Komponente Ai:
- Komponente A1: 45 Gew-Teile Geniosil STPE 10, silanterminiertes Polypropylenglycol mit einer mittleren Molmasse (Mn) von 12000 g/mol und Endgruppen der Formel -O-C=O-NH-CH₂-SiCH₃(OCH₃)₂ (Handelsprodukt der Wacker Chemie AG)
- Komponente A2: 19 Gew-Teile Martinal ON313S, Aluminiumhydroxid der Fa. Huber-Martinswerk GmbH, Bergheim, 18 Gew-Teile Omyacarb 2T-AV, gemahlene Kreide der Fa. Omya GmbH, Köln, 3 Gew-Teile Kronos 2310, Titandioxid Weißpigment der Fa. Kronos Europe. S.A., 1,5 Gew-Teile Aerosil R972, pyrogene Kieselsäure der Fa. Evonik Industries AG, Essen, 0,5 Gew-Teile Bayferrox 306, Eisenoxid-Schwarzpigment der Fa. Lanxess Deutschland GmbH, Köln
- Komponente A3: 1 Gew-Teil Geniosil GF 96, 3-Aminopropyltrimethoxysilan, Handelsprodukt der Fa. Wacker Chemie AG, Burghausen
- Komponente A4: 2,5 Gew-Teile Geniosil XL10, Vinyltrimethoxysilan, Handelsprodukt der Fa. Wacker Chemie AG, Burghausen
- Komponente A5: 1,5 Gew-Teile Irganox 1010, phenolisches Antioxidationsmittel der Fa. BASF SE, Ludwigshafen, 1 Gew-Teil Tinuvin 384-2, Benzotriazol-UV-Absorber der Fa. BASF SE, Ludwigshafen, 3 Gew-Teile Tinuvin 123, HALS-Lichtstabilisator der Fa. BASF SE, Ludwigshafen
- Komponente A6: 8 Gew-Teile Hexadecyltrimethoxysilan, Dynasylan 9116, Handelsprodukt der Fa. Evonik Industries AG, Essen

Die Mischung hat eine rotationsviskosimetrisch bestimmte Viskosität von 12500 mPas bei 23°C.

Komponente Aii:
- Komponente A1: 35 Gew-Teile silanterminiertes Polypropylenglycol-Polyurethanprepolymer mit einer mittleren Molmasse (Mn) von ca. 12000 g/mol und Endgruppen der Formel -N-C=O-NR-(CH₂)₃-Si(OCH₃)₃ (R=C₈H₁₁O₄, hergestellt gemäß WO 0026271A1, Beispiel 1)
- Komponente A2: 21 Gew-Teile Martinal OL 104 LEO, Aluminiumhydroxid der Fa. Huber-Martinswerk GmbH, Bergheim, 10 Gew-Teile Omyacarb 2T-AV, gemahlene Kreide der Fa. Omya GmbH, Köln, 7 Gew-Teile Omyalite 95T, gemahlene Kreide der Fa. Omya GmbH, Köln, 2 Gew-Teile Fällungskreide, Hakuenka CCR-S der Fa. Shiraishi-Omya GmbH, Gummern, Österreich, 3 Gew-Teile Kronos 2310, Titandioxid Weißpigment der Fa. Kronos Europe. S.A., 0,5 Gew-Teile Bayferrox 306, Eisenoxid-Schwarzpigment der Fa. Lanxess Deutschland GmbH, Köln
- Komponente A3: 1,5 Gew-Teile Dynasylan DAMO, N-Aminoethyl-3-Aminopropyltrimethoxysilan, Handelsprodukt der Fa. Evonik Industries AG Essen, 1,5 Gew-Teile Dibutylamin
- Komponente A4: 3,5 Gew-Teile Geniosil XL70, Phenyltrimethoxysilan, Handelsprodukt der Fa. Wacker Chemie AG, Burghausen
- Komponente A5: 0,5 Gew-Teile Irganox 1076, phenolisches Antioxidationsmittel der Fa. BASF SE, Ludwigshafen, 1 Gew-Teil Tinuvin 384-2, Benzotriazol-UV-Absorber der Fa. BASF SE, Ludwigshafen, 1,5 Gew-Teile Chimasorb 119, polymerer HALS-Lichtstabilisator der Fa. BASF SE, Ludwigshafen
- Komponente A6: 6 Gew-Teile Octyltrimethoxysilan, Dynasylan OCTMO, Handelsprodukt der Fa. Evonik Industries AG, Essen. 2 Gew-Teile Weichmacher Cyclohexandicarbonsäurediisononylester, Hexamoll DINCH der Fa. BASF SE, Ludwigshafen

Die Mischung hat eine rotationsviskosimetrisch bestimmte Viskosität von 17200 mPas bei 23°C.

Komponente Aiii:
- Komponente A1: 45 Gew-Teile Geniosil STPE 15, silanterminiertes Polypropylenglycol mit einer mittleren Molmasse (Mn) von 12000 g/mol und Endgruppen der Formel -O-CO-NH-(CH₂)₃-Si(OCH₃)₃ (Handelsprodukt der Wacker Chemie AG)
- Komponente A2: 19 Gew-Teile Martinal ON313S, Aluminiumhydroxid der Fa. Huber-Martinswerk GmbH, Bergheim, 19 Gew-Teile Omyacarb 2T-AV, gemahlene Kreide der Fa. Omya GmbH, Köln, 3 Gew-Teile Kronos 2310, Titandioxid Weißpigment der Fa. Kronos Europe. S.A., 1,5 Gew-Teile Aerosil R972, pyrogene Kieselsäure der Fa. Evonik Industries AG, Essen, 0,5 Gew-Teile Bayferrox 306, Eisenoxid-Schwarzpigment der Fa. Lanxess Deutschland GmbH, Köln
- Komponente A3: 1,5 Gew-Teile Geniosil GF 96, 3-Aminopropyltrimethoxysilan, Handelsprodukt der Fa. Wacker Chemie AG, Burghausen, 1,5 Gew-Teile N,N-Diethyl-1,3-propandiamin
- Komponente A4: 2,5 Gew-Teile Geniosil XL10, Vinyltrimethoxysilan, Handelsprodukt der Fa. Wacker Chemie AG, Burghausen
- Komponente A5: 1,5 Gew-Teile Irganox 1010, phenolisches Antioxidationsmittel der Fa. BASF SE, Ludwigshafen, 1 Gew-Teil Tinuvin 384-2, Benzotriazol-UV-Absorber der Fa. BASF SE, Ludwigshafen, 2 Gew-Teile Tinuvin 123, HALS-Lichtstabilisator der Fa. BASF SE, Ludwigshafen
- Komponente A6: 5 Gew-Teile Hexadecyltrimethoxysilan, Dynasylan 9116, Handelsprodukt der Fa. Evonik Industries AG, Essen, 3 Gew-Teile Weichmacher Acclaim 2200, Polypropylenglykol der Fa. Covestro AG, Leverkusen

Die Mischung hat eine rotationsviskosimetrisch bestimmte Viskosität von 14500 mPas bei 23°C.

### Allgemeine Herstellvorschrift für die Komponente B

Alle Komponenten werden in einer Standard-Rührapparatur gerührt, bis eine homogene Lösung entstanden ist.

Komponente Bi:
60 Gew-Teile Polypropylenglykol, mittleres Molekulargewicht = 800 g/mol
10 Gew.-Teile Neodecansäure
30 Gew.-Teile Wasser

Komponente Bii:
58 Gew.-Teile Polypropylenglykol, mittleres Molekulargewicht = 400 g/mol
12 Gew-Teile Propionsäure
30 Gew-Teile Wasser

Komponente Biii:
61 Gew-Teile Polypropylenglykol, mittleres Molekulargewicht = 800 g/mol
9 Gew.-Teile 2-Ethylhexansäure
30 Gew.-Teile Wasser

Komponente Biv:
50 Gew-Teile Polypropylenglykol, mittleres Molekulargewicht = 1000 g/mol
20 Gew.-Teile Phoshorsäuredibutylester
30 Gew.-Teile Wasser

### Aushärtung und Überprüfung der Haftung auf handelsüblichen Abdichtungsbahnen

### Erfindungsgemäße Beispiele:

Jeweils 300g der Komponente A werden durch intensives Rühren vermischt mit 3 g der Komponente B. Unmittelbar nach dem Mischen wird das System wie nachstehend beschrieben appliziert. Alle Proben sind nach einer Zeit von 60 bis 120 Minuten durchgehärtet.

### Nicht erfindungsgemäße Vergleichsbeispiele

Die Komponente A wird -ohne Zusatz der Komponente B- als feuchtigkeitshärtendes 1-Komponenten-Abdichtungsmaterial verwendet. Die Hautbildungszeit beträgt 30 bis 90 Minuten, die Durchhärtung der Proben dauert ca. 3 Tage.

### Überprüfung der Haftung

Auf Musterstücke handelsüblicher Abdichtungsbahnen werden die flüssigen 1- und 2-Komponenten-Abdichtungsmassen in einer Menge aufgebracht, die 1,7 kg/m² entspricht. In die reagierende Masse wird ein Polyestervlies mit einem Flächengewicht von 110g/m² (Frankolon Vlies, der Firma Franken-Systems Gollhofen) eingelegt und vorsichtig angedrückt, so dass die Unterseite gleichmäßig von der reagierenden Masse benetzt ist. Hierbei wird an einer Seite der Musterfläche ein unbeschichteter Vliesüberstand von ca. 5 cm Breite belassen. Danach wird die Oberseite des Polyestervlieses nochmals mit jeweils der gleichen Menge der flüssigen 1- und 2-Komponenten Abdichtungsmassen überschichtet, so dass das Vlies vollständig benetzt ist mit Ausnahme des Vliesüberstands, der unbeschichtet bleibt. Die Gesamtmenge an Abdichtungsmasse entspricht 3,4kg/m². Die durchschnittliche Schichtstärke der so hergestellten vliesarmierten Abdichtung beträgt 2,2 +/- 0,1 mm.

### Beurteilung der Haftung:

Die Abdichtung wird jeweils 7d bei 23°C und 50% rel. Luftfeuchtigkeit ausgehärtet. Danach wird die Haftung mittels eines manuellen Schälversuchs überprüft. Hierbei wird am Vliesüberstand parallel zur Oberfläche der beschichteten Bahn gezogen und der Schälwiderstand wird wie folgt mit den Noten 1 bis 4 beurteilt:
1 Abdichtungsmaterial lässt sich mit leichtem Kraftaufwand rückstandsfrei von der Abdichtungsbahn entfernen
2 Abdichtungsmaterial lässt sich mit mäßigem Kraftaufwand von der Abdichtungsbahn entfernen, wobei geringe Reste Abdichtungsmaterial an der Bahn verbleiben
3 Abdichtungsmaterial lässt sich nur mit großem Kraftaufwand von der Abdichtungsbahn entfernen, wobei größere Reste Abdichtungsmaterial an der Bahn verbleiben
4 Abdichtungsmaterial lässt sich durch Zerstörung der Vlieseinlage von der Abdichtungsbahn entfernen.

### Verwendete Handelsübliche Abdichtungsbahnen

Bahn A: Bauder Thermoplan T15, Polyolefinbahn der Fa. Paul Bauder GmbH & Co KG, Stuttgart, grundiert mit Liquitec Primer Kunststoff der Fa. Paul Bauder GmbH & Co KG, Stuttgart, Deutschland
Bahn B: Bauder Thermofin F15V, Polyolefinbahn der Fa. Paul Bauder GmbH & Co KG, Stuttgart, grundiert mit Frankolan FPO-Primer der Fa. Franken-Systems GmbH, Gollhofen, Deutschland
Bahn C: Wolfin M Dachbahn, PVC-P-Bahn der Fa. BMI Flachdach GmbH, Bamberg grundiert mit Frankolan FPO-Primer der Fa. Franken-Systems GmbH, Gollhofen, Deutschland
Bahn D: Wolfin IB Dachbahn, PVC-P-Bahn der Fa. BMI Flachdach GmbH, Bamberg grundiert mit Frankolan FPO-Primer der Fa. Franken-Systems GmbH, Gollhofen, Deutschland
Bahn E: Bauder Karat Dachbahn, Polymerbitumen Schweißbahn mit beschieferter Oberseite der Fa. Paul Bauder GmbH & Co KG, Stuttgart, Deutschland

| Komponenten | Ai + Bi | Ai+Bii | Ai+Biii | Ai+Biv | Ai (n.e.) |
|---|---|---|---|---|---|
| Bahn A | 4 | 4 | 4 | 4 | 3 |
| Bahn B | 4 | 4 | 4 | 3 | 2 |
| Bahn C | 4 | 4 | 3 | 3 | 2 |
| Bahn D | 3 | 3 | 3 | 3 | 2 |
| Bahn E | 4 | 4 | 4 | 4 | 3 |

| Komponenten | Aii + Bi | Aii+Bii | Aii+Biii | Aii+Biv | Aii (n.e.) |
|---|---|---|---|---|---|
| Bahn A | 4 | 4 | 4 | 4 | 3 |
| Bahn B | 3 | 3 | 3 | 2-3 | 1 |
| Bahn C | 3 | 4 | 4 | 3 | 2-3 |
| Bahn D | 4 | 4 | 3 | 3 | 2-3 |
| Bahn E | 4 | 4 | 4 | 3-4 | 3 |

| Komponenten | Aiii + B | Aiii+Bii | Aiii+Biii | Aiii+Biv | Ai (n.e.) |
|---|---|---|---|---|---|
| Bahn A | 4 | 3 | 4 | 3 | 2-3 |
| Bahn B | 3-4 | 3-4 | 3 | 2-3 | 2 |
| Bahn C | 3 | 3-4 | 3 | 3 | 2 |
| Bahn D | 3-4 | 3-4 | 3 | 3 | 2-3 |
| Bahn E | 4 | 4 | 4 | 4 | 3 |

| | | | | | |
|---|---|---|---|---|---|
| (n.e. = nicht erfindungsgemäß) | | | | | |

## Patentansprüche

1. 2-Komponenten-Beschichtungszusammensetzung zur Bauwerksabdichtung mit Katalysator-Cokatalysator-System umfassend eine Komponente A und eine Komponente B, wobei die Komponente A zumindest umfasst:
A1) eine polymere Verbindung der Formel
Y-[(CH₂)_{b}-Si-R1ₐ-R2₍₃₋ₐ₎]ₓ, wobei Y ein x-wertiger, ggf. Urethangruppen aufweisender Polyetherrest ist, der über eine Urethangruppe, eine Thiourethangruppe oder über eine ggf. substituierte Harnstoffgruppe angebunden ist und R1 eine Methylgruppe ist und R2 eine Methoxy- oder Ethoxygruppe ist und a gleich 0 oder 1 ist und b gleich 1 oder 3 ist;
A2) anorganische Füllstoffe;
A3) Aminosilanverbindung mit mindestens einer primären und/oder sekundären Aminogruppe;
A4) Verbindungen der Strukturformel Rₓ-Si(OCH₃)₃, wobei Rₓ eine Vinyl- oder Phenylgruppe;
A5) Alterungsschutzmittel;
und wobei die Komponente B zumindest umfasst:
B1) eine organische Säure oder deren saure Salze.

2. 2-Komponenten-Beschichtungszusammensetzung nach Anspruch 1, wobei die Komponente A zusätzlich als Komponente A6 Formulierungshilfsmittel umfasst.

3. 2-Komponenten-Beschichtungszusammensetzung nach Anspruch 1 oder 2, wobei die Komponente A als Formulierungshilfsmittel A6 ein organisches Lösemittel mit einem Anteil von maximal 5 Gew%, vorzugsweise mit einem Anteil von maximal 3 Gew%, bezogen auf das Gesamtgewicht der Komponenten A und B umfasst.

4. 2-Komponenten-Beschichtungszusammensetzung nach einem der vorangehenden Ansprüche, wobei die Komponente Aals Formulierungshilfsmittel A6 einen Weichmacher mit einem Anteil von maximal 5 Gew%, vorzugsweise mit einem Anteil von maximal 3 Gew%, bezogen auf das Gesamtgewicht der Komponenten A und B umfasst.

5. 2-Komponenten-Beschichtungszusammensetzung nach einem der vorangehenden Ansprüche, wobei die Komponente A als Formulierungshilfsmittel A6 einen reaktiven Verdünner umfasst.

6. 2-Komponenten-Beschichtungszusammensetzung nach einem der vorangehenden Ansprüche, wobei die Komponente A als Formulierungshilfsmittel A6 ein flüssiges Silikonharz umfasst.

7. 2-Komponenten-Beschichtungszusammensetzung nach einem der vorangehenden Ansprüche, wobei a und b = 1 und wobei R2 eine Methoxygruppe ist.

8. 2-Komponenten-Beschichtungszusammensetzung nach einem der vorangehenden Ansprüche, wobei a =0 und b = 3 und wobei R2 eine Methoxygruppe ist.

9. 2-Komponenten-Beschichtungszusammensetzung nach einem der vorangehenden Ansprüche, wobei die Komponente B eine aliphatische Carbonsäure oder Dicarbonsäure umfasst.

10. 2-Komponenten-Beschichtungszusammensetzung nach Anspruch 1, wobei die Komponente B eine aliphatische Monocarbonsäure mit 1 bis 16 Kohlenstoffatomen umfasst.

11. 2-Komponenten-Beschichtungszusammensetzung nach einem der vorangehenden Ansprüche, wobei die Komponente B zusätzlich mindestens einen ein- oder mehrwertigen Alkohol umfasst.

12. 2-Komponenten-Beschichtungszusammensetzung nach einem der vorangehenden Ansprüche, wobei die Komponente B als Komponente B2 Wasser umfasst.

13. 2-Komponenten-Beschichtungszusammensetzung nach Anspruch 11, umfassend Wasser als Komponente B2 zu einem Anteil in einem Bereich von 0,05 Gew% bis 0,9 Gew%, vorzugsweise 0,1 Gew% bis 0,5 Gew%, bezogen auf das Gesamtgewicht der Komponente A.

14. 2-Komponenten-Beschichtungszusammensetzung nach einem der vorangehenden Ansprüche, aufweisend ein Mischungsverhältnis A:B in einem Bereich zwischen 1000:1 bis 20:1, vorzugsweise in einem Bereich zwischen 500:1 und 50:1.

15. Verfahren zur Bauwerksabdichtung umfassend den Verfahrensschritt der Applikation einer 2-Komponenten-Beschichtungszusammensetzung gemäß einem der vorangehenden Ansprüche in Kombination mit einem Textil.

16. Verfahren nach Anspruch 15, wobei Dehn- und/oder Arbeits- und/oder Sollrissfugen im Betonbau ausgebildet werden.

## Claims

1. Two-component coating composition for construction sealing with a catalyst-co-catalyst system comprising a component A and a component B, wherein component A at least comprises:
A1) a polymeric compound of the formula Y-[(CH₂)_{b}-Si-R1ₐ-R2₍₃₋ₐ₎]ₓ, wherein Y is an x-valent polyether residue, optionally having urethane groups, which is bonded via an urethane group, a thiourethane group or via an optionally substituted urea group, and R1 is a methyl group and R2 is a methoxy or ethoxy group and a is equal to 0 or 1 and b is equal to 1 or 3;
A2) inorganic fillers;
A3) an aminosilane compound with at least one primary and/or secondary amino group;
A4) compounds of the structural formula Rₓ-Si(OCH₃)₃, where Rx is a vinyl or phenyl group;
A5) anti-aging agents;
and wherein the component B comprises at least:
B1) an organic acid or its acid salts.

2. Two-component coating composition according to claim 1, wherein component A additionally comprises a formulation adjuvant as a component A6.

3. Two-component coating composition according to claim 1 or 2, wherein component A comprises an organic solvent as a formulation adjuvant A6 in a proportion of at most 5 wt%, preferably in a proportion of at most 3 wt%, based on the total weight of components A and B.

4. Two-component coating composition according to one of the preceding claims, wherein component A comprises a plasticizer as a formulation adjuvant A6 in a proportion of at most 5 wt%, preferably in a proportion of at most 3 wt%, based on the total weight of components A and B.

5. Two-component coating composition according to one of the preceding claims, wherein component A comprises a reactive thinner as a formulation adjuvant A6.

6. Two-component coating composition according to one of the preceding claims, wherein component A comprises a liquid silicone resin as a formulation adjuvant A6.

7. Two-component coating composition according to one of the preceding claims, wherein a and b = 1, and wherein R2 is a methoxy group.

8. Two-component coating composition according to one of the preceding claims, wherein a = 0 and b = 3, and wherein R2 is a methoxy group.

9. Two-component coating composition according to one of the preceding claims, wherein component B comprises an aliphatic carboxylic acid or dicarboxylic acid.

10. Two-component coating composition according to claim 1, wherein component B comprises an aliphatic monocarboxylic acid having 1 to 16 carbon atoms.

11. Two-component coating composition according to one of the preceding claims, wherein component B additionally comprises at least one monovalent or polyvalent alcohol.

12. Two-component coating composition according to one of the preceding claims, wherein component B comprises water as a component B2.

13. Two-component coating composition according to claim 11, comprising water as component B2 in a proportion ranging from 0.05 wt% to 0.9 wt%, preferably 0.1 wt% to 0.5 wt%, based on the total weight of component A.

14. Two-component coating composition according to one of the preceding claims, having a mixing ratio A:B in a range between 1000:1 and 20:1, preferably in a range between 500 :1 and 50:1.

15. Method for construction sealing, comprising the method step of applying a two-component coating composition according to one of the preceding claims in combination with a textile.

16. Method according to claim 15, wherein expansion and/or working and/or controlled crack joints are formed in concrete constructions.

## Revendications

1. Composition de revêtement à deux composants pour l'étanchéification de constructions, avec un système catalyseur-co-catalyseur comprenant un composant A et un composant B, dans laquelle le composant A comprend au moins :
A1) un composé polymère de formule Y-[(CH₂)_{b}-Si-R1ₐ-R2₍₃₋ₐ₎]ₓ, dans laquelle Y est un résidu polyéther x-valent, comportant éventuellement des groupes uréthane, qui est lié via un groupe uréthane, un groupe thiouréthane ou via un groupe urée éventuellement substitué, et R1 est un groupe méthyle et R2 est un groupe méthoxy ou éthoxy et a est égal à 0 ou 1 et b est égal à 1 ou 3 ;
A2) des charges inorganiques ;
A3) un composé aminosilane comportant au moins un groupe amino primaire et/ou secondaire ;
A4) des composés de formule structurale Rₓ-Si(OCH₃)₃, où Rₓ est un groupe vinyle ou phényle ;
A5) des agents anti-vieillissement ;
et dans laquelle le composant B comprend au moins :
B1) un acide organique ou ses sels acides.

2. Composition de revêtement à deux composants selon la revendication 1, dans laquelle le composant A comprend en outre un adjuvant de formulation en tant que composant A6.

3. Composition de revêtement à deux composants selon la revendication 1 ou 2, dans laquelle le composant A comprend un solvant organique en tant qu'adjuvant de formulation A6 dans une proportion d'au plus 5 % en poids, de préférence dans une proportion d'au plus 3 % en poids, par rapport au poids total des composants A et B.

4. Composition de revêtement à deux composants selon l'une des revendications précédentes, dans laquelle le composant A comprend un agent plastifiant en tant qu'adjuvant de formulation A6 dans une proportion d'au plus 5 % en poids, de préférence dans une proportion d'au plus 3 % en poids, par rapport au poids total des composants A et B.

5. Composition de revêtement à deux composants selon l'une des revendications précédentes, dans laquelle le composant A comprend un diluant réactif en tant qu'adjuvant de formulation A6.

6. Composition de revêtement à deux composants selon l'une des revendications précédentes, dans laquelle le composant A comprend une résine de silicone liquide en tant qu'adjuvant de formulation A6.

7. Composition de revêtement à deux composants selon l'une des revendications précédentes, dans laquelle a et b = 1, et dans laquelle R2 est un groupe méthoxy.

8. Composition de revêtement à deux composants selon l'une des revendications précédentes, dans laquelle a = 0 et b = 3, et dans laquelle R2 est un groupe méthoxy.

9. Composition de revêtement à deux composants selon l'une des revendications précédentes, dans laquelle le composant B comprend un acide carboxylique aliphatique ou un acide dicarboxylique.

10. Composition de revêtement à deux composants selon la revendication 1, dans laquelle le composant B comprend un acide monocarboxylique aliphatique ayant 1 à 16 atomes de carbone.

11. Composition de revêtement à deux composants selon l'une des revendications précédentes, dans laquelle le composant B comprend en outre au moins un alcool monohydrique ou polyhydrique.

12. Composition de revêtement à deux composants selon l'une des revendications précédentes, dans laquelle le composant B comprend de l'eau en tant que composant B2.

13. Composition de revêtement à deux composants selon la revendication 11, comprenant de l'eau en tant que composant B2 dans une proportion comprise entre 0,05 % en poids et 0,9 % en poids, de préférence entre 0,1 % en poids et 0,5 % en poids, par rapport au poids total du composant A.

14. Composition de revêtement à deux composants selon l'une des revendications précédentes, ayant un rapport de mélange A:B dans une plage comprise entre 1000:1 et 20:1, de préférence dans une plage comprise entre 500:1 et 50:1.

15. Procédé d'étanchéification de constructions, comprenant l'étape consistant à appliquer une composition de revêtement à deux composants selon l'une des revendications précédentes en combinaison avec un textile.

16. Procédé selon la revendication 15, dans lequel des joints de dilatation et/ou de travail et/ou de fissuration contrôlée sont formés dans des constructions en béton.
